# EUROPEAN PATENT SPECIFICATION

(11) **EP 3 991 970 B1**
(45) Date of publication and mention of the grant of the patent: **25.09.2024**
(21) Application number: 20832650.4
(22) Date of filing: 19.06.2020
(51) Int. Cl.: C08J 5/18, C08G 63/60, B32B 27/36, B32B 15/09, B32B 15/18, B32B 15/20, B32B 27/18, B32B 27/20

(54) **LCP EXTRUDED FILM, AND FLEXIBLE LAMINATE USING THE SAME AND MANUFACTURING METHOD THEREOF**
EXTRUDIERTE LCP-FOLIE, DARAUS HERGESTELLTES FLEXIBLES LAMINAT UND VERFAHREN ZU DESSEN HERSTELLUNG
FILM EXTRUDÉ EN PCL, STRATIFIÉ SOUPLE L'UTILISANT ET SON PROCÉDÉ DE FABRICATION

(30) Priority: 27.06.2019 JP 2019119826
(43) Date of publication of application: 04.05.2022
(73) Proprietor: Denka Company Limited, Tokyo 103-8338 (JP)
(72) Inventor: OGAWA, Naoki, Tokyo 103-8338 (JP); MASUDA, Yusuke, Tokyo 103-8338 (JP)
(74) Representative: Zacco Sweden AB
(86) International application number: PCT/JP2020/024220
(87) International publication number: WO 2020/262255

(56) References cited:
- EP-A1- 3 287 260
- EP-A1- 3 427 926
- WO-A1-2016/114262
- JP-A- S5 477 691
- JP-A- S55 144 024
- JP-A- S61 157 527
- US-A1- 2017 318 670

## Description

### Technical Field

The present invention relates to an LCP extruded film, and a flexible laminate using the LCP extruded film and a manufacturing method thereof.

### Background Art

Liquid crystal polymers (LCP) are polymers that exhibit liquid crystallinity in a molten state or a solution state. Especially, thermotropic liquid crystal polymers that exhibit liquid crystallinity in a molten state have excellent properties such as high strength, high heat resistance, high insulation properties, low water absorption, and high gas barrier properties, and are therefore rapidly coming into practical use in electronic material applications and electrically insulating material applications.

Since having excellent high frequency characteristics and low dielectric properties, the liquid crystal polymer is attracting attention as an insulating material for flexible printed wiring boards (FPC) and the like in the fifth-generation mobile communication system (5G), millimeter wave radar, and the like that will be developed in the future.

As a method for manufacturing a flexible laminate using a liquid crystal polymer, for example, Patent Literature 1 discloses a method for manufacturing a flexible laminate, comprising a thermocompression bonding step of continuously supplying an insulating film including a liquid crystal polymer and a metal foil between a pair of endless belts, and subjecting the insulating film and the metal foil to thermocompression bonding between the endless belts to form a flexible laminate, wherein in the thermocompression bonding step, the flexible laminate is heated such that the maximum temperature of the flexible laminate can be within a range not less than a temperature of 45°C lower than the melting point of the liquid crystal polymer constituting the insulating film and not more than a temperature of 5°C lower than the same melting point, and the flexible laminate is gradually cooled such that the outlet temperature of the flexible laminate at the time of unloading from the endless belts can be within a range not less than a temperature of a temperature 235°C lower than the melting point of the liquid crystal polymer constituting the insulating film and not more than a temperature of 100°C lower than the same melting point.

### Citation List

### Patent Literature

Patent Literature 1: Japanese Patent Laid-Open No. 2016-129949
Further patent literature: EP 3287260A1, EP 3427962A1 and US 2017/318670A.

### Summary of Invention

### Technical Problem

However, it is described that, in the manufacturing method described in Patent Literature 1, troubles frequently occur such as being unable to continuously operate or being unable to obtain a flexible laminate having a high dimensional accuracy when precise temperature control is not carried out in the thermocompression bonding step (see [0047] of Patent Literature 1).

Patent Literature 1 also describes that an LCP film formed by inflation film formation is used as an insulating film, and the peel strength can be enhanced by performing thermocompression bonding at a temperature not less than the melting point (335°C) of this LCP film (see Comparative Examples 11 and 12 of Patent Literature 1). However, it is described that this leads to significant deterioration of the dimensional accuracy and the predetermined object cannot be achieved (see [0048] of Patent Literature 1). In addition, it will be readily imagined that, if thermocompression bonding is performed at a temperature exceeding the melting point of the LCP film, the flexible laminate to be obtained may have a higher cost and reduced basic performance such as mechanical strength as compared with other flexible laminates.

As described above, the manufacturing method of Patent Literature 1 is poor in process tolerance in continuously producing high quality flexible laminates and poor in productivity and versatility from an industrial viewpoint. That is, there is a technical limitation only by precisely controlling the temperature in the thermocompression bonding step, and a new design policy that can exceed such a technical level is required.

The present invention has been made in view of the above problems. An object of the present invention is to provide an LCP extruded film that can increase process tolerance in manufacture of a flexible laminate, without excessively impairing basic performance possessed by the liquid crystal polymer, such as mechanical characteristics, electrical characteristics, high frequency characteristics, heat resistance, and hygroscopicity.

Another object of the present invention is to provide an LCP extruded film which allows a flexible laminate having high peel strength to a metal foil to be easily obtained, even under mild manufacturing conditions as compared with those of the prior art. Further, another object of the present invention is to provide a flexible laminate having high peel strength to a metal foil and excellent productivity and economy, a manufacturing method which allows such a flexible laminate to be easily obtained with good reproducibility, and the like.

### Solution to Problem

The present inventors have intensively studied by focusing on the properties and the crystalline state of various LCP extruded films to solve the above problems, and have found that the above problems can be solved by using an LCP extruded film including an aromatic polyester-based liquid crystal polymer having a predetermined crystallinity, thereby completing the present invention.

That is, the present invention provides the various specific aspects shown below.
(1) An LCP extruded film comprising
   an aromatic polyester-based liquid crystal polymer at least having at least a monomer component A selected from the group consisting of para-hydroxybenzoic acid and derivatives thereof, and a monomer component B selected from the group consisting of 6-hydroxy-2-naphthoic acid and derivatives thereof, as monomer components,
   the content in terms of molar ratio of the monomer component A to the aromatic polyester-based liquid crystal polymer is 30 mol% or more and less than 90 mol%,
   the content in terms of molar ratio of the monomer component B to the aromatic polyester-based liquid crystal polymer is 10 mol% or more and less than 70 mol%, and
   the LCP extruded film is an unstretched LCP film extruded by T die, and has a dissolution rate in pentafluorophenol at 60°C of 250 or more, wherein the dissolution rate is calculated as specified in paragraph [0037] below.
(2) The LCP extruded film according to (1), wherein the LCP extruded film has a melting point of 250 to 360°C.
(3) The LCP extruded film according to any one of (1) to (2), wherein a film thickness is 10 µm or more and less than 500 µm.
(4) A method for manufacturing a flexible laminate, at least comprising:
   a step of providing at least one LCP extruded film comprising an aromatic polyester-based liquid crystal polymer at least having at least a monomer component A selected from the group consisting of para-hydroxybenzoic acid and derivatives thereof, a monomer component B selected from the group consisting of 6-hydroxy-2-naphthoic acid and derivatives thereof, as monomer components,
   a step of performing thermocompression bonding by heating a resulting laminate to not less than a temperature of 50°C lower than the melting point of the aromatic polyester-based liquid crystal polymer and not more than the melting point;
      the content in terms of molar ratio of the monomer component A to the aromatic polyester-based liquid crystal polymer is 30 mol% or more and less than 90 mol%,
   the content in terms of molar ratio of the monomer component B to the aromatic polyester-based liquid crystal polymer is 10 mol% or more and less than 70 mol%, and
   the LCP extruded film is an unstretched LCP film extruded by T die, and has a dissolution rate in pentafluorophenol at 60°C of 25% or more, wherein the dissolution rate is calculated as specified in paragraph [0037] below.
(5) The method for manufacturing a flexible laminate according to (4), wherein the LCP extruded film has a melting point of 250 to 360°C.
(6) The method for manufacturing a flexible laminate according to any one of (4) to (5), wherein the LCP extruded film has a thickness of 10 µm or more and less than 500 µm.
(7) The method for manufacturing a flexible laminate according to any one of (4) to (6), wherein the metal foil is at least one selected from the group consisting of a copper foil, an aluminum foil, a stainless steel foil, and an alloy foil of copper and aluminum.
(8) The method for manufacturing a flexible laminate according to any one of (4) to (7), wherein a flexible laminate having a peel strength between the LCP extruded film and the metal foil of 1.0 (N/mm) or more is obtained.
(9) A flexible laminate comprising:
   at least one LCP extruded film comprising an aromatic polyester-based liquid crystal polymer at least having at least a monomer component A selected from the group consisting of para-hydroxybenzoic acid and derivatives thereof, and a monomer component B selected from the group consisting of 6-hydroxy-2-naphthoic acid and derivatives thereof, as monomer components,
   at least one metal foil provided on at least one surface of the LCP extruded film;
   characterised in that
   the content in terms of molar ratio of the monomer component A to the aromatic polyester-based liquid crystal polymer is 30 mol% or more and less than 90 mol%,
      the content in terms of molar ratio of the monomer component B to the aromatic polyester-based liquid crystal polymer is 10 mol% or more and less than 70 mol%, and
   the LCP extruded film is an unstretched LCP film extruded by T die, and has a dissolution rate in pentafluorophenol at 60°C of 25% or more, wherein the dissolution rate is calculated as specified in paragraph [0037].
(10) The flexible laminate according to (9), wherein the LCP extruded film has a melting point of 250 to 360°C.
(11) The flexible laminate according to any one of (9) to (10), wherein a peel strength between the LCP extruded film and the metal foil is 1.0 (N/mm) or more.
(12) The flexible laminate according to any one of (9) to (11), wherein the LCP extruded film has a thickness of 10 µm or more and less than 500 µm.

### Advantageous Effects of Invention

The present invention can provide an LCP extruded film that can increase process tolerance in manufacture of a flexible laminate, without excessively impairing basic performance possessed by the liquid crystal polymer, such as mechanical characteristics, electrical characteristics, high frequency characteristics, heat resistance, and hygroscopicity. A preferred aspect of the present invention can provide an LCP extruded film which allows a flexible laminate having high peel strength to a metal foil to be easily obtained, even under mild manufacturing conditions as compared with those of the prior art. Further, another preferred aspect of the present invention can provide a flexible laminate having high peel strength to a metal foil and excellent productivity and economy, a manufacturing method which allows such a flexible laminate to be easily obtained with good reproducibility, and the like.

### Brief Description of Drawings

[Figure 1] Figure 1 is a schematic view of an LCP extruded film 11 of one embodiment.
[Figure 2] Figure 2 is a schematic view of a flexible laminate 31 of one embodiment.

### Description of Embodiments

Hereinafter, the embodiments of the present invention will be described in detail with reference to the drawings. Unless otherwise indicated, the positional relationship, such as top, bottom, left, and right is based on the positional relationship shown in the drawings. Also, the dimensional ratios of the drawings are not limited to those illustrated in the drawings. It should be noted that the following embodiments are merely examples for explaining the present invention, and the present invention is not limited thereto. That is, the present invention can be appropriately modified and implemented within a range not departing from the gist of the present invention. As used herein, for example, the description of the numerical value range "1 to 100" includes both the lower limit value "1" and the upper limit value "100". Also, the same applies to the description of other numerical value ranges.

### (LCP Extruded Film)

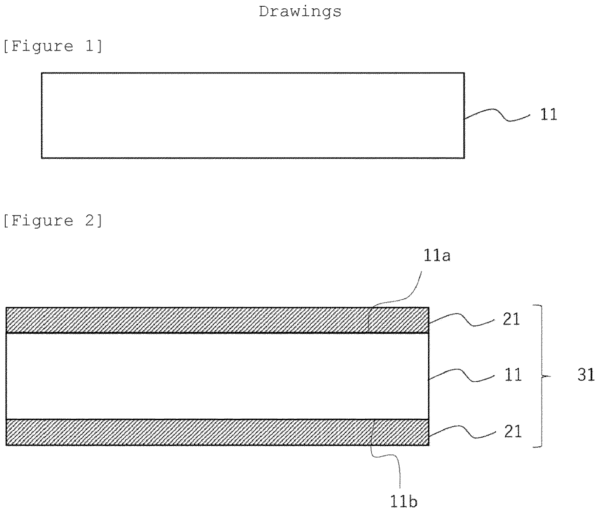

Figure 1 is a schematic view of an LCP extruded film 11 of the present embodiment. The LCP extruded film 11 of the present embodiment contains an aromatic polyester-based liquid crystal polymer at least having 6-hydroxy-2-naphthoic acid and derivatives thereof (hereinafter, simply referred to as "monomer component B") which is a basic structure, and at least one selected from the group consisting of para-hydroxybenzoic acid, terephthalic acid, isophthalic acid, 6-naphthalenedicarboxylic acid, 4,4'-biphenol, bisphenol A, hydroquinone, 4,4-dihydroxybiphenol, ethylene terephthalate and derivatives thereof (hereinafter, simply referred to as "monomer component A"), as monomer components, and has a dissolution rate in pentafluorophenol at 60°C of 25% or more.

The aromatic polyester-based liquid crystal polymer containing the monomer component A and the monomer component B described above forms an anisotropic molten phase in which linear chains of molecules are regularly aligned in a molten state, typically exhibits thermotropic liquid crystalline properties, and has excellent basic performance such as mechanical characteristics, electrical characteristics, high frequency characteristics, heat resistance, and hygroscopicity. The properties of the anisotropic molten phase of the aromatic polyester-based liquid crystal polymer described above can be confirmed by a known method such as a polarization test method using crossed polarizers. More specifically, the anisotropic molten phase can be confirmed by observing a sample placed on a Leitz hot stage with a Leitz polarization microscope under a nitrogen atmosphere at 40-fold magnification.

The aromatic polyester-based liquid crystal polymer described above may employ any constitution as long as it has the monomer component A and the monomer component B as essential units. For example, it may have two or more monomer components A, or three or more monomer components A. The aromatic polyester-based liquid crystal polymer described above may contain other monomer components other than the monomer component A and the monomer component B. That is, the aromatic polyester-based liquid crystal polymer may be a binary or higher polycondensate consisting of only the monomer component A and the monomer component B, or may be a ternary or higher polycondensate consisting of the monomer component A, the monomer component B, and other monomer components. Other monomer components (hereinafter, also simply referred to as the "monomer component C") are other than the monomer component A and the monomer component B described above, and specific examples thereof include aromatic or aliphatic dihydroxy compounds and derivatives thereof; aromatic or aliphatic dicarboxylic acid and derivatives thereof; aromatic hydroxycarboxylic acid and derivatives thereof; aromatic diamine, aromatic hydroxyamine, or aromatic aminocarboxylic acid and derivatives thereof, but are not particularly limited thereto.

As used herein, the "derivatives" means those which have a modifying group such as a halogen atom (e.g., a fluorine atom, a chlorine atom, a bromine atom, and a iodine atom), an alkyl group having 1 to 5 carbon atoms (e.g., a methyl group, an ethyl group, an n-propyl group, an isopropyl group, an n-butyl group, an isobutyl group, an s-butyl group, and a t-butyl group), an aryl group such as a phenyl group, a hydroxyl group, an alkoxy group having 1 to 5 carbon atoms (e.g., a methoxy group and an ethoxy group), a carbonyl group, -O-, -S-, and -CH₂-introduced in a part of the monomer components described above (hereinafter, also referred to as "monomer component having a substituent"). Here, the "derivatives" may be acylated products, ester derivatives, or ester forming monomers such as acid halides, of the monomer components A and B, which may have a modifying group described above.

Examples of the preferred aromatic polyester-based liquid crystal polymer include a binary polycondensate of para-hydroxybenzoic acid and derivatives thereof, and 6-hydroxy-2-naphthoic acid and derivatives thereof; a ternary or higher polycondensate of para-hydroxybenzoic acid and derivatives thereof, 6-hydroxy-2-naphthoic acid and derivatives thereof, and the monomer component C; a ternary or higher polycondensate of para-hydroxybenzoic acid and derivatives thereof, 6-hydroxy-2-naphthoic acid and derivatives thereof, and at least one selected from the group consisting of terephthalic acid, isophthalic acid, 6-naphthalenedicarboxylic acid, 4,4'-biphenol, bisphenol A, hydroquinone, 4,4-dihydroxybiphenol, ethylene terephthalate, and derivatives thereof; a quaternary or higher polycondensate of para-hydroxybenzoic acid and derivatives thereof, 6-hydroxy-2-naphthoic acid and derivatives thereof, at least one selected from the group consisting of terephthalic acid, isophthalic acid, 6-naphthalenedicarboxylic acid, 4,4'-biphenol, bisphenol A, hydroquinone, 4,4-dihydroxybiphenol, ethylene terephthalate, and derivatives thereof, and one or more monomer components C. These can be obtained as the aromatic polyester-based liquid crystal polymer having a relatively low melting point as compared with, for example, a homopolymer of para-hydroxybenzoic acid, and thus, LCP extruded films using these polymers have excellent fabricability in the thermocompression bonding to an adherend.

From the viewpoint of reducing the melting point of the aromatic polyester-based liquid crystal polymer, increasing the fabricability of the LCP extruded film in the thermocompression bonding to an adherend, obtaining high peel strength when the LCP extruded film is thermocompression bonded to a metal foil, or the like, the content in terms of molar ratio of the monomer component A to the aromatic polyester-based liquid crystal polymer is 30 mol% or more and less than 90 mol%, preferably 50 mol% or more and less than 90 mol%, further preferably 60 mol% or more and less than 90 mol%, and still more preferably 70 mol% or more and less than 85 mol%. Similarly, the content in terms of molar ratio of the monomer component B to the aromatic polyester-based liquid crystal polymer is 10 mol% or more and less than 70 mol%, preferably 10 mol% or more and less than 50 mol%, further preferably 10 mol% or more and less than 40 mol%, and still more preferably 15 mol% or more and less than 30 mol%.

The content of the monomer component C that may be contained in the aromatic polyester-based liquid crystal polymer is preferably 10% by mass or less, more preferably 8% by mass or less, further preferably 5% by mass or less, and preferably 3% by mass or less in terms of molar ratio.

A known method may be applied to the manufacturing method of the aromatic polyester-based liquid crystal polymer without particular limitation. A known polycondensation method to form ester bonds by the monomer components described above, such as melt polymerization, a melt acidolysis method, and a slurry polymerization method can be applied. When these polymerization methods are applied, an acylation or acetylation step may be performed in accordance with a conventional method.

The LCP extruded film is obtained by forming a molten resin composition containing the aromatic polyester-based liquid crystal polymer described above into a film by a known melt film formation method such as T die extrusion and inflation extrusion.

The LCP extruded film preferably contains the aromatic polyester-based liquid crystal polymers described above, which are resin components, as the main component. Here, containing an aromatic polyester-based liquid crystal polymer as the main component means containing 80 parts by mass or more, preferably 90 parts by mass or more, further preferably 95 parts by mass or more, and particularly preferably 97 parts by mass or more and 100 parts by mass or less of the aromatic polyester-based liquid crystal polymer per 100 parts by mass in total of the resin components of the LCP extruded film.

In addition to the resin components described above, the LCP extruded film may contain additives known in the art, for example, release improving agents such as higher fatty acids having 10 to 25 carbon atoms, higher fatty acid esters, higher fatty acid amide, higher fatty acid metal salts, polysiloxane, and fluorine resins; colorants such as dyes, pigments, and carbon black; organic fillers; inorganic fillers; antioxidants; thermal stabilizers; ultraviolet absorbers; antistatic agents; and surfactants, within a range not excessively impairing the effects of the present invention. These additives can be contained in the molten resin composition during film formation of the LCP extruded film. These additives can be used each one alone or in combination of two or more. The content of the additive is not particularly limited, but is preferably 0.01 to 10% by mass, more preferably 0.1 to 7% by mass, and further preferably 0.5 to 5% by mass, based on a total amount of the LCP extruded film, from the viewpoint of fabricability and thermal stability.

The melting point of the LCP extruded film is not particularly limited, but is preferably 200 to 400°C from the viewpoint of the heat resistance, processability, and the like of the film, and is preferably 250 to 360°C, more preferably 260 to 355°C, further preferably 270 to 350°C, and particularly preferably 275 to 345°C from the viewpoint of especially increasing the thermocompression bonding properties to the metal foil. As used herein, the melting point of the LCP extruded film means the melting peak temperature in differential scanning calorimetry (DSC) when a film to be subjected to pressure bonding is heated at a temperature elevation rate of 20°C/minute (1st heating).

One feature of the LCP extruded film of the present invention is that the dissolution rate in pentafluorophenol at 60°C is 25% or more. As long as the dissolution rate in pentafluorophenol at 60°C of the LCP extruded film is 25% or more, preferably 30% or more, and more preferably 40% or more, high peel strength to the metal foil can be obtained even when the LCP extruded film is thermocompression bonded to the metal foil at a temperature not more than the melting point of the film. Then, thermocompression bonding of such an LCP extruded film at a temperature not more than the melting point of the film allows the process tolerance in manufacture of a flexible laminate to be increased, without excessively impairing the basic performance of the liquid crystal polymer.

Hereinafter, the technical idea of the present invention will be described in detail. When an LCP extruded film having a low dissolution rate in pentafluorophenol at 60°C is used, high peel strength to a metal foil is hardly obtained in the thermocompression bonding to the metal foil at a temperature not more than the melting point of the film. In view of the above, it is considered that liquid crystal parts are not sufficiently melted in the thermocompression bonding at a temperature not more than the melting point, and unevenness in the adhesion state during pressure bonding is thus likely to occur due to the reasons such as nonrelieved internal strains and a large amount of unmolten and remaining crystal parts present, or a large spherulite size and a large amount of remaining spherulites, so that high peel strength cannot be obtained. That is, it is considered that the crystalline state of the LCP extruded film to be used itself strongly affects the peel strength to the metal foil, in the thermocompression bonding to the metal foil at a temperature not more than the melting point of the film.

According to the findings of the present inventors, it has been found that use of an LCP extruded film in a crystalline state in which internal strain is small and the amount of unmolten and remaining crystal parts present is small, or in which spherulite size is small and remaining spherulites are few is necessary to obtain high peel strength in the thermocompression bonding to a metal foil at a temperature not more than the melting point of the film. Here, the crystalline state of the LCP extruded film changes depending on not only the type of aromatic polyester-based liquid crystal polymer to be used, but also heat history such as heat treatment in manufacture of the raw material pellet, heat treatment in manufacture of the LCP extruded film, and post-heat treatment (annealing treatment) of the LCP extruded film after manufacture. When an LCP extruded film is in a crystalline state in which internal strain is small and the amount of unmolten and remaining crystal parts present is small or in which spherulite size is small and remaining spherulites are few, high peel strength can be obtained even by performing thermocompression bonding to a metal foil at a temperature not more than the melting point of the film. That is, in other words, the present invention employs the dissolution rate in pentafluorophenol as an index which indicates an LCP extruded film having a thus adjusted crystalline state.

As used herein, the dissolution rate in pentafluorophenol of the LCP extruded film means a value calculated by immersing 10 mg of the LCP extruded film in 10 g of pentafluorophenol, allowing it to stand under stirring at 60°C for 15 minutes to dissolve, and then taking out resin solids remained without dissolving. The dissolution rate in pentafluorophenol of the LCP extruded film can be appropriately adjusted depending on the type of aromatic polyester-based liquid crystal polymer to be used, heat treatment conditions in manufacture of the raw material pellet containing this, heat treatment conditions in manufacture of the LCP extruded film, annealing treatment conditions of the LCP extruded film after manufacture, and the like.

The thickness of the LCP extruded film can be appropriately set in accordance with required performance, and is not particularly limited. Considering the handleability and the productivity during melt extrusion and the like, the thickness is preferably 5 µm or more and less than 1,000 µm, more preferably 10 µm or more and less than 500 µm, further preferably 20 µm or more and less than 300 µm, and further preferably 30 µm or more and less than 250 µm.

The LCP extruded film of the present invention is an unstretched film, and thus not a stretched film. In both cases, typically, an LCP extruded film having alignment can be easily obtained due to the presence of an anisotropic melt phase in the aromatic polyester-based liquid crystal polymer during melt extrusion. Thus, the coefficient of thermal expansion (CTE) of the LCP extruded film in the film MD direction is preferably -40 to 0 ppm/K and the coefficient of thermal expansion in the film TD direction is preferably 0 to 120 ppm/K. The coefficient of thermal expansion in the film thickness direction is preferably 300 ppm/K or more.

For example, an unstretched film can be obtained by a melt film formation method using a T die. In this case, typically, an unstretched film having high alignment can be easily obtained due to the presence of an anisotropic melt phase in the aromatic polyester-based liquid crystal polymer during melt extrusion. When the LCP extruded film is an unstretched film, the coefficient of thermal expansion in the film MD direction is preferably -40 to 0 ppm/K and the coefficient of thermal expansion in the film TD direction is preferably 0 to 120 ppm/K. The coefficient of thermal expansion in the film thickness direction is preferably 300 ppm/K or more.

On the other hand, a stretched film can be obtained by, for example, an inflation extrusion melt film formation method. In this case, a stretched film having relatively low alignment can be obtained due to the flow during formation. When the LCP extruded film is a stretched film, the coefficient of thermal expansion in the film MD direction is preferably 0 to 40 ppm/K and the coefficient of thermal expansion in the film TD direction is preferably 0 to 40 ppm/K. The coefficient of thermal expansion in the film thickness direction is preferably less than 300 ppm/K.

The above unstretched film and stretched film can be further subjected to heat treatment (heat treatment and cooling treatment) to ease the alignment of polymer chains and to improve film dimensional stability in advance. These heat treatments are only required to be performed using methods known in the art such as contact heat treatment or non-contact heat treatment, and the type thereof is not particularly limited. Heat setting can be carried out using a known device such as a non-contact heater, an oven, a blowing apparatus, a heat roller, a cooling roller, a heat press, or a double belt heat press. At this time, heat treatment may be performed by placing a release film or a porous film known in the art on a surface of the LCP extruded film, if necessary. When this heat treatment is performed, a method in which a release film or a porous film is placed on both surfaces of the LCP extruded film, which is subjected to thermocompression bonding by sandwiching it between a pair of endless belts of a double belt press, and then the peeled film or the porous film is removed is also preferably used, from the viewpoint of controlling the alignment. The heat treatment at this time is preferably performed at a temperature higher than the melting point of the aromatic polyester-based liquid crystal polymer and not more than a temperature of 70°C higher than the melting point to control the crystalline state of the LCP extruded film. The thermocompression bonding conditions at this time can be appropriately set depending on the desired performance, and for example, when a double belt press is used, thermocompression bonding is preferably performed under the conditions of surface pressure of 0.5 to 10 MPa and a heating time of 250 to 430°C, but is not particularly limited thereto. On the other hand, when a non-contact heater or an oven is used, for example, thermocompression bonding is preferably performed under the conditions at 200 to 320°C for 1 to 20 hours. Then, the coefficient of thermal expansion of the LCP extruded film after treatment in the film MD direction is preferably 0 to 40 ppm/K, and the coefficient of thermal expansion in the film TD direction is preferably 0 to 40 ppm/K. The coefficient of thermal expansion in the film thickness direction is preferably less than 120 ppm/K.

### (Flexible Laminate)

Figure 2 is a schematic view of a flexible laminate 31 of the present embodiment. The flexible laminate 31 of the present embodiment (metal laminate film) includes the LCP extruded film 11 described above, and at least one metal foil 21 provided on at least one surface of this LCP extruded film 11. As used herein, "provided on one (another) surface side of" is a concept which encompasses not only an aspect in which the metal foil 21 is provided only on one surface 11a of the LCP extruded film 11, but also an aspect in which the metal foil 21 is provided another surface 11b of the LCP extruded film 11 and an aspect in which the metal foils 21 are provided on both surfaces 11a and 11b of the LCP extruded film 11.

Examples of the metal foil include, but are not particularly limited to, gold, silver, copper, copper alloy, nickel, nickel alloy, aluminum, aluminum alloy, iron, and iron alloy. Among these, a copper foil, an aluminum foil, a stainless steel foil, and an alloy foil of copper and aluminum are preferred, and a copper foil is more preferred. As such a copper foil, any one manufactured by a rolling method, an electrolysis method, or the like may be used, and electrolytic copper foil and rolled copper foil which have a relatively high surface roughness are preferred. The thickness of the metal foil may be appropriately set in accordance with the desired performance, and is not particularly limited. Typically, the thickness is preferably 1.5 to 1,000 µm, more preferably 2 to 500 µm, further preferably 5 to 150 µm, and particularly preferably 7 to 100 µm. As long as the function and effect of the present invention are not impaired, the metal foil may be subjected to surface treatment such as chemical surface treatment such as acid washing.

The method for providing a metal foil on the surface of the LCP extruded film can be performed in accordance with a conventional method, and is not particularly limited. The method may be any one of methods in which a metal foil is laminated on the LCP extruded film and then both layers are adhered or pressure bonded, physical methods (dry method) such as sputtering and vapor deposition, chemical methods (wet method) such as electroless plating and electrolytic plating after electroless plating, and methods for applying a metal paste.

Examples of the preferred laminating method include a method in which an LCP extruded film and a metal foil are stacked into a laminate having the metal foil placed on the LCP extruded film, and this laminate is subjected to thermocompression bonding while sandwiching the laminate between a pair of endless belts of a double belt press. As described above, the LCP extruded film used in the present embodiment can have high peel strength to the metal foil as compared with conventional films, even when being thermocompression bonded to the metal foil at a temperature not more than the melting point of the film. Thus, performing the thermocompression bonding under such temperature conditions, that is, thermocompression bonding of such an LCP extruded film at a temperature not more than the melting point of the film allows the process tolerance in manufacture of a flexible laminate to be increased and allows a flexible laminate having excellent productivity and economy to be easily realized with good reproducibility, without excessively impairing the basic performance of the liquid crystal polymer.

At this time, the temperature range during thermocompression bonding is a range at which the LCP extruded film is substantially not melted, that is, it may be not less than a temperature of 50°C lower than the melting point of the aromatic polyester-based liquid crystal polymer and not more than the melting point. Performing thermocompression bonding at a further low temperature allows the process tolerance in manufacture of a flexible laminate to be increased and allows a flexible laminate having excellent productivity and economy to be easily realized with good reproducibility, without excessively impairing the basic performance of the liquid crystal polymer. In contrast, the peel strength of the LCP extruded film to the metal foil tends to be further increased by performing thermocompression bonding at a higher temperature side. The LCP extruded film of the present embodiment can also be thermocompression bonded to the metal foil at a temperature exceeding the melting point of the film. Also in this case, since the LCP extruded film having a crystalline state suitable for thermocompression bonding is used, further high peel strength tends to be obtained as compared with conventional films.

The temperature during thermocompression bonding can be appropriately set depending on the desired performance from these viewpoints, and is preferably not less than a temperature of 50°C lower than the melting point of the aromatic polyester-based liquid crystal polymer and not more than the melting point, more preferably not less than a temperature of 40°C lower than the melting point and not more than the melting point, further preferably not less than a temperature of 30°C lower than the melting point and not more than the melting point, and particularly preferably not less than a temperature of 20°C lower than the melting point and not more than the melting point, but is not limited thereto. The temperature during thermocompression bonding is a value measured with the surface temperature of the LCP extruded film of the above-described laminate. The thermocompression bonding conditions at this time can be appropriately set in accordance with the desired performance, but is not particularly limited thereto. For example, when a double belt press is used, the thermocompression bonding is preferably performed under the conditions of surface pressure of 0.5 to 10 MPa and a heating time of 200 to 360°C.

The flexible laminate of the present embodiment may have a further laminated structure, as long as including a thermocompression-bonded body having a two layer structure of an LCP extruded film and a metal foil. The flexible laminate may be a multilayer structure at least having the two layer structure described above, for example, a three layer structure such as metal foil/LCP extruded film/metal foil or LCP extruded film/metal foil/LCP extruded film; or a five layer structure such as metal foil/LCP extruded film/metal foil/LCP extruded film/metal foil. Also, a plurality of flexible laminates (e.g., 2 to 50 laminates) may be laminated and thermocompression bonded.

In the flexible laminate of the present embodiment, the peel strength between the LCP extruded film and the metal foil is not particularly limited, but is preferably 1.0 (N/mm) or more, more preferably 1.1 (N/mm) or more, and further preferably 1.2 (N/mm) or more, from the viewpoint of providing further high peel strength. As used herein, the "peel strength" means a value measured by the method and conditions described in the Examples below. As described above, since the flexible laminate of the present embodiment can realize higher peel strength than the conventional technique, for example, peeling between the LCP extruded film and the metal foil can be suppressed in the heating step during manufacture of a substrate. In addition, since mild manufacturing conditions can be applied to obtain the same peel strength as the conventional technique, the deterioration of the basic performance possessed by the liquid crystal polymer can be suppressed, while maintaining the same degree of peel strength as the conventional flexible laminate.

The flexible laminate of the present embodiment can be used as a raw material for electronic circuit substrates, multilayer substrates, or the like, by performing pattern etching on at least a part of the metal foil, and can be used in applications such as high heat radiation substrates, antenna substrates, optoelectronic hybrid substrates, and IC packages. In addition, since having excellent high frequency characteristics and low dielectric properties, having excellent adhesiveness between the LCP extruded film and the metal foil, and having good dimensional stability, the flexible laminate of the present embodiment is an especially useful raw material as an insulating material for flexible printed wiring boards (FPC) and the like in the fifth-generation mobile communication system (5G), millimeter wave radar, and the like.

### Examples

The feature of the present invention will be further described in detail below by way of Examples and Comparative Examples, but the present invention is not limited thereto in any way. That is, the materials, amounts used, proportions, contents of treatment, treatment procedures, and the like presented in the following Examples can be appropriately modified. The values of various manufacturing conditions and evaluation results in the following Examples have a meaning as a preferred upper limit value or a preferred lower limit value in the embodiment of the present invention, and the preferred numerical value range may be a range defined by a combination of the upper limit value or the lower limit value and the values of the following Examples or a combination of values in Examples.

### (Example 1)

A reaction vessel equipped with a stirrer and a vacuum distillation apparatus was charged with p-hydroxybenzoic acid (74 mol%), 6-hydroxy-2-naphthoic acid (26 mol%), and 1.025-fold molar amount of acetic anhydride relative to the total monomer amount, and the reaction vessel was warmed to 150°C under a nitrogen atmosphere and held for 30 minutes, and then immediately warmed to 190°C while distilling off the byproduct acetic acid and held for 1 hour to obtain an acetylated reaction product. The obtained acetylated reaction product was warmed to 320°C over 3.5 hours, then the pressure was reduced to 2.7 kPa over about 30 minutes to perform melt polycondensation, and the pressure was gradually returned to ordinary pressure to obtain a polymer solid. The obtained polymer solid was ground and granulated at 300°C with a biaxial extruder to obtain pellets of an aromatic polyester-based liquid crystal polymer consisting of p-hydroxybenzoic acid and 6-hydroxy-2-naphthoic acid (molar ratio 74:26). The obtained pellets were used to form a film by T die casting, thereby obtaining an LCP extruded film having a melting point of 280°C and a thickness of 50 µm.

### (Example 2)

A reaction vessel equipped with a stirrer and a vacuum distillation apparatus was charged with p-hydroxybenzoic acid (80 mol%), 6-hydroxy-2-naphthoic acid (19 mol%), terephthalic acid (1 mol%), and 1.025-fold molar amount of acetic anhydride relative to the total monomer amount, and the reaction vessel was warmed to 150°C under a nitrogen atmosphere and held for 30 minutes, and then immediately warmed to 190°C while distilling off the byproduct acetic acid and held for 1 hour to obtain an acetylated reaction product. The obtained acetylated reaction product was warmed to 330°C over 3.5 hours, then the pressure was reduced to 2.7 kPa over about 30 minutes to perform melt polycondensation, and the pressure was gradually returned to ordinary pressure to obtain a polymer solid. The obtained polymer solid was ground and granulated at 330°C with a biaxial extruder to obtain pellets of an aromatic polyester-based liquid crystal polymer consisting of p-hydroxybenzoic acid, 6-hydroxy-2-naphthoic acid, and terephthalic acid (molar ratio 80:19:1). The obtained pellets were used to form a film by T die casting, thereby obtaining an LCP extruded film having a melting point of 310°C and a thickness of 50 µm.

### (Example 3)

A reaction vessel equipped with a stirrer and a vacuum distillation apparatus was charged with p-hydroxybenzoic acid (22 mol%), 6-hydroxy-2-naphthoic acid (49 mol%), terephthalic acid (16 mol%), 4,4'-biphenol (13 mol%), and 1.025-fold molar amount of acetic anhydride relative to the total monomer amount, and the reaction vessel was warmed to 150°C under a nitrogen atmosphere and held for 30 minutes, and then immediately warmed to 190°C while distilling off the byproduct acetic acid and held for 1 hour to obtain an acetylated reaction product. The obtained acetylated reaction product was warmed to 360°C over 4 hours, then the pressure was reduced to 2.7 kPa over about 30 minutes to perform melt polycondensation, and the pressure was gradually returned to ordinary pressure to obtain a polymer solid. The obtained polymer solid was ground and granulated at 360°C with a biaxial extruder to obtain pellets of an aromatic polyester-based liquid crystal polymer consisting of p-hydroxybenzoic acid, 6-hydroxy-2-naphthoic acid, terephthalic acid, and 4,4'-biphenol (molar ratio 22:49:16:13). The obtained pellets were used to form a film by T die casting, thereby obtaining an LCP extruded film having a melting point of 340°C and a thickness of 50 µm.

### (Example 4)

The LCP extruded film of Example 1 was subjected to contact heat treatment at 320°C for 30 seconds using a double belt heat press to obtain an LCP extruded film having a melting point of 280°C.

### (Example 5)

The LCP extruded film of Example 1 was subjected to non-contact heat treatment at 260°C for 2 hours using an oven, and further subjected to non-contact heat treatment at 280°C for 4 hours to obtain an LCP extruded film having a melting point of 290°C.

### (Comparative Example 1)

The LCP extruded film of Example 1 was subjected to non-contact heat treatment at 260°C for 2 hours using an oven, and further subjected to non-contact heat treatment at 290°C for 20 hours to obtain an LCP extruded film having a melting point of 310°C and a thickness of 50 µm.

### (Comparative Example 2)

A reaction vessel equipped with a stirrer and a vacuum distillation apparatus was charged with p-hydroxybenzoic acid (72 mol%), 6-hydroxy-2-naphthoic acid (27 mol%), terephthalic acid (1 mol%), and 1.025-fold molar amount of acetic anhydride relative to the total monomer amount, and the reaction vessel was warmed to 150°C under a nitrogen atmosphere and held for 30 minutes, and then immediately warmed to 190°C while distilling off the byproduct acetic acid and held for 1 hour to obtain an acetylated reaction product. The obtained acetylated reaction product was warmed to 320°C over 3.5 hours, then the pressure was reduced to 2.7 kPa over about 30 minutes to perform melt polycondensation, and the pressure was gradually returned to ordinary pressure to obtain a polymer solid. The obtained polymer solid was ground and granulated at 300°C with a biaxial extruder to obtain pellets of an aromatic polyester-based liquid crystal polymer consisting of p-hydroxybenzoic acid, 6-hydroxy-2-naphthoic acid, and terephthalic acid (molar ratio 72:27:1). The obtained pellets were used to form a film by inflation extrusion, and the film was subjected to non-contact heat treatment at 260°C for 2 hours using an oven, and further subjected to non-contact heat treatment at 290°C for 6 hours to obtain an LCP extruded film having a melting point of 335°C and a thickness of 50 µm.

### <Dissolution rate>

The dissolution rate of the LCP extruded film was measured under the following conditions.

In 10 g of pentafluorophenol at 60°C, 10 mg of freeze-ground LCP extruded film was immersed and allowed to stand under stirring for 15 minutes to dissolve the film, and then resin solids remained without dissolving were filtered by a wire mesh of 400 mesh and dried, and the dissolution rate of the LCP extruded film was calculated based on the mass of the wire mesh before and after filtration. Dissolution rate (%) = (Mass of LCP extruded film - (wire mesh mass after filtration and drying - mass of wire mesh before filtration))/mass of LCP extruded film × 100

### <Peel Strength>

The peel strength of the flexible laminate was measured under the following conditions.

The LCP extruded film to be measured was thermocompression bonded with an electrolytic copper foil (TQ-M7VSP manufactured by MITSUI MINING & SMELTING CO.,LTD.) at a surface pressure of 5 MPa for 1 minute under the temperature conditions described in Table 1 and Table 2 to obtain a flexible laminate consisting of the LCP extruded film and the copper foil. The obtained flexible laminate was cut into a rectangular test specimen with a width of 10 mm, and the copper foil peel strength was measured by peeling the copper foil using STROGRAPH VE1D (manufactured by Toyo Seiki Seisaku-sho, Ltd.) in the 180-degree direction at a tensile rate of 50 mm/minute under the conditions of a temperature of 23°C and a relative humidity of 50% and evaluated in accordance with the following criteria.

| | |
|---|---|
| ⊚Material failure (non-peelable) off the scale, approximately | 1.5 N/mm or more |
| ○peeled | 1.0 N/ mm or more |
| × peeled less than | 1.0 N/mm |

The results are shown in Table 1 and Table 2.

**[Table 1]**

| | | | Example 1 | Example 2 | Example 3 |
|---|---|---|---|---|---|
| Monomer component A | p-Hydroxybenzoic acid | | 74 | 80 | 22 |
| | Terephthalic acid | | - | 1 | 16 |
| | 4,4'-Biphenol | | - | - | 13 |
| Monomer component B | 6-Hydroxy-2-naphthoic acid | | 26 | 19 | 49 |
| Post-heating | Method | | None | None | None |
| | Conditions | | - | - | - |
| Melting point | (°C) | | 280 | 310 | 340 |
| Dissolution rate | (%) | | 99.0 | 100.0 | 48.6 |
| Copper foil peel strength | Thermocompression bonding temperature | Melting point ± 0°C | ⊚ | ⊚ | ⊚ |
| | | Melting point -10°C | ⊚ | ⊚ | ⊚ |
| | | Melting point -20°C | ⊚ | ⊚ | ⊚ |
| | | Melting point -30°C | ⊚ | ⊚ | × |

**[Table 2]**

| | | | Example 1 | Example 4 | Example 5 | Comparative Example 1 | Comparative Example 2 |
|---|---|---|---|---|---|---|---|
| Monomer component A | p-Hydroxybenzoic acid | | 74 | 74 | 74 | 74 | 72 |
| | Terephthalic acid | | - | - | - | - | 1 |
| | 4,4'-Biphenol | | - | - | - | - | - |
| Monomer component B | 6-Hydroxy-2-naphthoic acid | | 26 | 26 | 26 | 26 | 27 |
| Post-heating | Method | | None | Contact | Non-contact | Non-contact | Non-contact |
| | Conditions | | - | 320°C × 30 sec | 260°C × 2 h | 260°C × 2 h | 260°C × 2 h |
| | | | | | 280°C × 4h | 290°C × 20 h | 290°C × 6 h |
| Melting point | (°C) | | 280 | 280 | 290 | 310 | 335 |
| Dissolution rate | (%) | | 99.0 | 90.4 | 77.9 | 24.0 | 21.6 |
| Copper foil peel strength | Thermocompression bonding temperature | Melting point ±0°C ± 0°C | ⊚ | ⊚ | ⊚ | ⊚ | ⊚ |
| | | Melting point ±0°C -10°C | ⊚ | ⊚ | ⊚ | × | × |
| | | Melting point ±0°C -20°C | ⊚ | ⊚ | ⊚ | × | × |
| | | Melting point ±0°C -30°C | ⊚ | ⊚ | ⊚ | × | × |

### Industrial Applicability

The LCP extruded film and the like of the present invention are not only excellent in excellent basic performance possessed by the liquid crystal polymer, such as mechanical characteristics, electrical characteristics, high frequency characteristics, heat resistance, and hygroscopicity, but also allows a flexible laminate having high peel strength to a metal foil to be easily obtained, and allows the process tolerance in manufacture of a flexible laminate to be increased. Therefore, the LCP extruded film and the like of the present invention can be widely and effectively utilized in applications such as electronic circuit substrates, multilayer substrates, high heat radiation substrates, antenna substrates, optoelectronic hybrid substrates, and IC packages, and since having especially excellent high frequency characteristics and low dielectric properties, the LCP extruded film and the like of the present invention can be especially widely and effectively utilized as an insulating material for flexible printed wiring boards (FPC) and the like in the fifth-generation mobile communication system (5G), millimeter wave radar, and the like.

### Reference Signs List

- 11: LCP extruded film
- 21: Metal foil
- 31: Flexible laminate

## Claims

1. An LCP extruded film comprising:
an aromatic polyester-based liquid crystal polymer at least having at least a monomer component A selected from the group consisting of para-hydroxybenzoic acid and derivatives thereof, and a monomer component B selected from the group consisting of 6-hydroxy-2-naphthoic acid and derivatives thereof, as monomer components, **characterised in that**
the content in terms of molar ratio of the monomer component A to the aromatic polyester-based liquid crystal polymer is 30 mol% or more and less than 90 mol%,
the content in terms of molar ratio of the monomer component B to the aromatic polyester-based liquid crystal polymer is 10 mol% or more and less than 70 mol%, and
the LCP extruded film is an unstretched LCP film extruded by T die, and has a dissolution rate in pentafluorophenol at 60°C of 25% or more, wherein the dissolution rate is calculated as specified in the description.

2. The LCP extruded film according to claim 1,
wherein the LCP extruded film has a melting point of 250 to 360°C, wherein by melting point it is meant the melting peak temperature obtained in differential scanning calorimetry when the unstretched LCP film is heated at a temperature elevation rate of 20°C/minute.

3. The LCP extruded film according to any one of claims 1 to 2,
wherein a film thickness is 10 µm or more and less than 500 µm.

4. A method for manufacturing a flexible laminate, at least comprising:
a step of providing at least one LCP extruded film comprising an aromatic polyester-based liquid crystal polymer at least having at least a monomer component A selected from the group consisting of para-hydroxybenzoic acid and derivatives thereof, a monomer component B selected from the group consisting of 6-hydroxy-2-naphthoic acid and derivatives thereof, as monomer components;
a step of stacking the LCP extruded film and at least one metal foil; and
a step of performing thermocompression bonding by heating a resulting laminate to not less than a temperature of 50°C lower than the melting point of the aromatic polyester-based liquid crystal polymer and not more than the melting point;
**characterised in that**
the content in terms of molar ratio of the monomer component A to the aromatic polyester-based liquid crystal polymer is 30 mol% or more and less than 90 mol%,
the content in terms of molar ratio of the monomer component B to the aromatic polyester-based liquid crystal polymer is 10 mol% or more and less than 70 mol%, and
the LCP extruded film is an unstretched LCP film extruded by T die, and has a dissolution rate in pentafluorophenol at 60°C of 25% or more, wherein the dissolution rate is calculated as specified in the description.

5. The method for manufacturing a flexible laminate according to claim 4,
wherein the LCP extruded film has a melting point of 250 to 360°C, wherein by melting point it is meant the melting peak temperature obtained in differential scanning calorimetry when the unstretched LCP film is heated at a temperature elevation rate of 20°C/minute.

6. The method for manufacturing a flexible laminate according to any one of claims 4 to 5,
wherein the LCP extruded film has a thickness of 10 µm or more and less than 500 µm.

7. The method for manufacturing a flexible laminate according to any one of claims 4 to 6,
wherein the metal foil is at least one selected from the group consisting of a copper foil, an aluminum foil, a stainless steel foil, and an alloy foil of copper and aluminum.

8. The method for manufacturing a flexible laminate according to any one of claims 4 to 7,
wherein a flexible laminate having a peel strength between the LCP extruded film and the metal foil of 1.0 (N/mm) or more is obtained, wherein the peel strength is determined using the method defined in the description

9. A flexible laminate comprising:
at least one LCP extruded film comprising an aromatic polyester-based liquid crystal polymer at least having at least a monomer component A selected from the group consisting of para-hydroxybenzoic acid and derivatives thereof, and a monomer component B selected from the group consisting of 6-hydroxy-2-naphthoic acid and derivatives thereof, as monomer components; and
at least one metal foil provided on at least one surface of the LCP extruded film;
**characterised in that**
the content in terms of molar ratio of the monomer component A to the aromatic polyester-based liquid crystal polymer is 30 mol% or more and less than 90 mol%,
the content in terms of molar ratio of the monomer component B to the aromatic polyester-based liquid crystal polymer is 10 mol% or more and less than 70 mol%, and
the LCP extruded film is an unstretched LCP film extruded by T die, and has a dissolution rate in pentafluorophenol at 60°C of 25% or more, wherein the dissolution rate is calculated as specified in the description.

10. The flexible laminate according to claim 9,
wherein the LCP extruded film has a melting point of 250 to 360°C, wherein by melting point it is meant the melting peak temperature obtained in differential scanning calorimetry when the unstretched LCP film is heated at a temperature elevation rate of 20°C/minute.

11. The flexible laminate according to any one of claims 9 to 10,
wherein a peel strength between the LCP extruded film and the metal foil is 1.0 (N/mm) or more, wherein the peel strength is determined using the method defined in the description.

12. The flexible laminate according to any one of claims 9 to 11,
wherein the LCP extruded film has a thickness of 10 µm or more and less than 500 µm.

## Patentansprüche

1. Extrudierter LCP-Film, umfassend:
ein aromatisches polyesterbasiertes Flüssigkristallpolymer, das mindestens eine Monomerkomponente A, die aus der Gruppe ausgewählt ist, die aus para-Hydroxybenzoesäure und Derivaten davon besteht, und eine Monomerkomponente B, die aus der Gruppe ausgewählt ist, die aus 6-Hydroxy-2-naphthoesäure und Derivaten davon besteht, als Monomerkomponenten mindestens aufweist,
**dadurch gekennzeichnet, dass**
der Gehalt hinsichtlich Molarverhältnisses der Monomerkomponente A zu dem aromatischen polyesterbasierten Flüssigkristallpolymer 30 Mol-% oder mehr und weniger als 90 Mol-% beträgt,
der Gehalt hinsichtlich Molarverhältnisses der Monomerkomponente B zu dem aromatischen polyesterbasierten Flüssigkristallpolymer 10 Mol-% oder mehr und weniger als 70 Mol-% beträgt und
der extrudierte LCP-Film ein ungedehnter LCP-Film ist, der durch eine T-Matrize extrudiert wird und eine Auflösungsgeschwindigkeit in Pentafluorphenol bei 60 °C von 25 % oder mehr aufweist, wobei die Auflösungsgeschwindigkeit wie in der Beschreibung spezifiziert berechnet wird.

2. Extrudierter LCP-Film nach Anspruch 1,
wobei der extrudierte LCP-Film einen Schmelzpunkt von 250 bis 360 °C aufweist, wobei mit Schmelzpunkt die Schmelzspitzentemperatur gemeint ist, die in dynamischer Differenzkalorimetrie erlangt wird, wenn der ungedehnte LCP-Film bei einer Temperaturerhöhungsgeschwindigkeit von 20 °C/Minute erhitzt wird.

3. Extrudierter LCP-Film nach einem der Ansprüche 1 bis 2,
wobei eine Filmdicke 10 µm oder mehr und weniger als 500 µm beträgt.

4. Verfahren zum Herstellen eines flexiblen Laminats, mindestens umfassend:
einen Schritt von Bereitstellen mindestens eines extrudierten LCP-Films, der ein aromatisches polyesterbasiertes Flüssigkristallpolymer umfasst, das mindestens eine Monomerkomponente A, die aus der Gruppe ausgewählt ist, die aus para-Hydroxybenzoesäure und Derivaten davon besteht, und eine Monomerkomponente B, die aus der Gruppe ausgewählt ist, die aus 6-Hydroxy-2-naphthoesäure und Derivaten davon besteht, als Monomerkomponenten mindestens aufweist;
einen Schritt von Stapeln des extrudierten LCP-Films und mindestens einer Metallfolie; und
einen Schritt von Durchführen von Thermokompressionsverbindung durch Erhitzen eines hervorgehenden Laminats auf nicht weniger als eine Temperatur, die 50 °C niedriger als der Schmelzpunkt des aromatischen polyesterbasierten Flüssigkristallpolymers liegt und nicht mehr als der Schmelzpunkt beträgt;
**dadurch gekennzeichnet, dass**
der Gehalt hinsichtlich Molarverhältnisses der Monomerkomponente A zu dem aromatischen polyesterbasierten Flüssigkristallpolymer 30 Mol-% oder mehr und weniger als 90 Mol-% beträgt,
der Gehalt hinsichtlich Molarverhältnisses der Monomerkomponente B zu dem aromatischen polyesterbasierten Flüssigkristallpolymer 10 Mol-% oder mehr und weniger als 70 Mol-% beträgt und
der extrudierte LCP-Film ein ungedehnter LCP-Film ist, der durch eine T-Matrize extrudiert wird und eine Auflösungsgeschwindigkeit in Pentafluorphenol bei 60 °C von 25 % oder mehr aufweist, wobei die Auflösungsgeschwindigkeit wie in der Beschreibung spezifiziert berechnet wird.

5. Verfahren zum Herstellen eines flexiblen Laminats nach Anspruch 4,
wobei der extrudierte LCP-Film einen Schmelzpunkt von 250 bis 360 °C aufweist, wobei mit Schmelzpunkt die Schmelzspitzentemperatur gemeint ist, die in dynamischer Differenzkalorimetrie erlangt wird, wenn der ungedehnte LCP-Film bei einer Temperaturerhöhungsgeschwindigkeit von 20 °C/Minute erhitzt wird.

6. Verfahren zum Herstellen eines flexiblen Laminats nach einem der Ansprüche 4 bis 5,
wobei der extrudierte LCP-Film eine Dicke von 10 µm oder mehr und weniger als 500 µm aufweist.

7. Verfahren zum Herstellen eines flexiblen Laminats nach einem der Ansprüche 4 bis 6,
wobei die Metallfolie mindestens eine ist, die aus der Gruppe ausgewählt ist, die aus einer Kupferfolie, einer Aluminiumfolie, einer Edelstahlfolie und einer Legierungsfolie aus Kupfer und Aluminium besteht.

8. Verfahren zum Herstellen eines flexiblen Laminats nach einem der Ansprüche 4 bis 7,
wobei ein flexibles Laminat erlangt wird, das eine Schälfestigkeit zwischen dem extrudierten LCP-Film und der Metallfolie von 1,0 (N/mm) oder mehr aufweist, wobei die Schälfestigkeit unter Verwendung des Verfahrens, das in der Beschreibung definiert ist, bestimmt wird.

9. Flexibles Laminat, umfassend:
mindestens einen extrudierten LCP-Film, der ein aromatisches polyesterbasiertes Flüssigkristallpolymer umfasst, das mindestens eine Monomerkomponente A, die aus der Gruppe ausgewählt ist, die aus para-Hydroxybenzoesäure und Derivaten davon besteht, und eine Monomerkomponente B, die aus der Gruppe ausgewählt ist, die aus 6-Hydroxy-2-naphthoesäure und Derivaten davon besteht, als Monomerkomponenten mindestens aufweist; und
mindestens eine Metallfolie, die auf mindestens einer Oberfläche des extrudierten LCP-Films bereitgestellt ist;
**dadurch gekennzeichnet, dass**
der Gehalt hinsichtlich Molarverhältnisses der Monomerkomponente A zu dem aromatischen polyesterbasierten Flüssigkristallpolymer 30 Mol-% oder mehr und weniger als 90 Mol-% beträgt,
der Gehalt hinsichtlich Molarverhältnisses der Monomerkomponente B zu dem aromatischen polyesterbasierten Flüssigkristallpolymer 10 Mol-% oder mehr und weniger als 70 Mol-% beträgt und
der extrudierte LCP-Film ein ungedehnter LCP-Film ist, der durch eine T-Matrize extrudiert wird und eine Auflösungsgeschwindigkeit in Pentafluorphenol bei 60 °C von 25 % oder mehr aufweist, wobei die Auflösungsgeschwindigkeit wie in der Beschreibung spezifiziert berechnet wird.

10. Flexibles Laminat nach Anspruch 9,
wobei der extrudierte LCP-Film einen Schmelzpunkt von 250 bis 360 °C aufweist, wobei mit Schmelzpunkt die Schmelzspitzentemperatur gemeint ist, die in dynamischer Differenzkalorimetrie erlangt wird, wenn der ungedehnte LCP-Film bei einer Temperaturerhöhungsgeschwindigkeit von 20 °C/Minute erhitzt wird.

11. Flexibles Laminat nach einem der Ansprüche 9 bis 10,
wobei eine Schälfestigkeit zwischen dem extrudierten LCP-Film und der Metallfolie 1,0 (N/mm) oder mehr beträgt, wobei die Schälfestigkeit unter Verwendung des Verfahrens, das in der Beschreibung definiert ist, bestimmt wird.

12. Flexibles Laminat nach einem der Ansprüche 9 bis 11,
wobei der extrudierte LCP-Film eine Dicke von 10 µm oder mehr und weniger als 500 µm aufweist.

## Revendications

1. Film extrudé en LCP, comprenant :
un polymère à cristaux liquides à base de polyester aromatique ayant au moins au moins un composant monomère A sélectionné dans le groupe constitué de l'acide para-hydroxybenzoïque et de dérivés de celui-ci, et un composant monomère B sélectionné dans le groupe constitué de l'acide 6-hydroxy-2-naphtoïque et de dérivés de celui-ci, en tant que composants monomères, **caractérisé en ce que**
la teneur en termes de rapport molaire du composant monomère A au polymère à cristaux liquides à base de polyester aromatique est supérieure ou égale à 30 % en moles et inférieure à 90 % en moles,
la teneur en termes de rapport molaire du composant monomère B au polymère à cristaux liquides à base de polyester aromatique est supérieure ou égale à 10 % en moles et inférieure à 70 % en moles,
et le film extrudé en LPC est un film en LCP non étiré extrudé par une filière en T, et a un taux de dissolution dans le pentafluorophénol à 60 °C supérieur ou égal à 25 %, dans lequel le taux de dissolution est calculé comme spécifié dans la description.

2. Film extrudé en LCP selon la revendication 1, dans lequel le film extrudé en LCP a un point de fusion de 250 à 360 °C, dans lequel par point de fusion on entend la température maximale de fusion obtenue par une calorimétrie différentielle à balayage lorsque le film LCP non étiré est chauffé à une vitesse de montée en température de 20 °C/minute.

3. Film extrudé en LCP selon l'une quelconque des revendications 1 et 2,
dans lequel une épaisseur de film est supérieure ou égale à 10 um et inférieure à 500 µm.

4. Procédé de fabrication d'un stratifié flexible, comprenant au moins :
une étape de fourniture d'au moins un film extrudé en LCP comprenant un polymère à cristaux liquides à base de polyester aromatique ayant au moins au moins un composant monomère A sélectionné dans le groupe constitué de l'acide para-hydroxybenzoïque et de dérivés de celui-ci, un composant monomère B sélectionné dans le groupe constitué de l'acide 6-hydroxy-2-naphtoïque et de dérivés de celui-ci, en tant que composants monomères ;
une étape d'empilement du film extrudé en LCP et d'au moins une feuille métallique ; et
une étape de réalisation d'une liaison par thermocompression en chauffant un stratifié obtenu à au moins une température inférieure de 50 °C au le point de fusion du polymère à cristaux liquides à base de polyester aromatique et pas supérieure au point de fusion ;
**caractérisé en ce que**
la teneur en termes de rapport molaire du composant monomère A au polymère à cristaux liquides à base de polyester aromatique est supérieure ou égale à 30 % en moles et inférieure à 90 % en moles,
la teneur en termes de rapport molaire du composant monomère B au polymère à cristaux liquides à base de polyester aromatique est supérieure ou égale à 10 % en moles et inférieure à 70 % en moles,
et le film en LCP extrudé est un film LCP non étiré extrudé par une filière en T, et a un taux de dissolution dans le pentafluorophénol à 60 °C supérieur ou égal à 25 %, dans lequel le taux de dissolution est calculé comme spécifié dans la description.

5. Procédé de fabrication d'un stratifié flexible selon la revendication 4,
dans lequel le film extrudé en LCP a un point de fusion de 250 à 360 °C, dans lequel par point de fusion on entend la température maximale de fusion obtenue par une calorimétrie différentielle à balayage lorsque le film en LCP non étiré est chauffé à une vitesse de montée en température de 20 °C/minute.

6. Procédé de fabrication d'un stratifié flexible selon l'une quelconque des revendications 4 et 5,
dans lequel le film extrudé en LCP a une épaisseur supérieure ou égale à 10 um et inférieure à 500 um.

7. Procédé de fabrication d'un stratifié flexible selon l'une quelconque des revendications 4 à 6,
dans lequel la feuille métallique est au moins une feuille sélectionnée dans le groupe constitué d'une feuille de cuivre, d'une feuille d'aluminium, d'une feuille d'acier inoxydable et d'une feuille d'alliage de cuivre et d'aluminium.

8. Procédé de fabrication d'un stratifié flexible selon l'une quelconque des revendications 4 à 7,
dans lequel un stratifié flexible ayant une résistance au pelage entre le film extrudé en LCP et la feuille métallique de 1,0 (N/mm) ou plus est obtenu, dans lequel la résistance au pelage est déterminée à l'aide du procédé défini dans la description.

9. Stratifié flexible comprenant :
au moins un film extrudé en LCP comprenant un polymère à cristaux liquides à base de polyester aromatique ayant au moins au moins un composant monomère A choisi dans le groupe constitué de l'acide para-hydroxybenzoïque et de dérivés de celui-ci, et un composant monomère B choisi dans le groupe constitué d'acide 6-hydroxy-2-naphtoïque et de dérivés de celui-ci, en tant que composants monomères ; et au moins une feuille métallique disposée sur au moins une surface du film extrudé en LCP ;
**caractérisé en ce que**
la teneur en termes de rapport molaire du composant monomère A au polymère à cristaux liquides à base de polyester aromatique est supérieure ou égale à 30 % en moles et inférieure à 90 % en moles,
la teneur en termes de rapport molaire du composant monomère B au polymère à cristaux liquides à base de polyester aromatique est supérieure ou égale à 10 % en moles et inférieure à 70 % en moles,
et le film en LCP extrudé est un film LCP non étiré extrudé par une filière en T, et a un taux de dissolution dans le pentafluorophénol à 60 °C supérieur ou égal à 25 %, dans lequel le taux de dissolution est calculé comme spécifié dans la description.

10. Stratifié flexible selon la revendication 9,
dans lequel le film extrudé en LCP a un point de fusion de 250 à 360°C, dans lequel par point de fusion on entend la température maximale de fusion obtenue par une calorimétrie différentielle à balayage lorsque le film en LCP non étiré est chauffé à une vitesse de montée en température de 20 °C/minute.

11. Stratifié flexible selon l'une quelconque des revendications 9 et 10,
dans lequel une résistance au pelage entre le film extrudé en LCP et la feuille métallique est supérieure ou égale à 1,0 (N/mm), dans lequel la résistance au pelage est déterminée à l'aide du procédé défini dans la description.

12. Stratifié flexible selon l'une quelconque des revendications 9 à 11,
dans lequel le film extrudé en LCP a une épaisseur supérieure ou égale à 10 um et inférieure à 500 µm.
